# EUROPÄISCHE PATENTSCHRIFT

(11) **EP 1 406 555 B1**
(45) Veröffentlichungstag und Bekanntmachung des Hinweises auf die Patenterteilung: **12.09.2007**
(21) Anmeldenummer: 02754812.2
(22) Anmeldetag: 02.07.2002
(51) Int. Cl.: A61C 13/00

(54) **VERFAHREN UND VORRICHTUNG ZUR DREIDIMENSIONALEN VERMESSUNG UND DIGITALISIERUNG EINES DENTALMODELLS**
METHOD AND DEVICE FOR THE THERE-DIMENSIONAL DETERMINATION AND DIGITISATION OF A DENTAL MODEL
PROCEDE ET DISPOSITIF POUR MESURER ET NUMERISER EN TROIS DIMENSIONS UN MODELE DENTAIRE

(30) Priorität: 13.07.2001 DE 10133568
(43) Veröffentlichungstag der Anmeldung: 14.04.2004
(73) Patentinhaber: DeguDent GmbH, 63457 Hanau (DE)
(72) Erfinder: WOLF, Dietrich, 69123 Heidelberg (DE); FECHER, Stefan, 63867 Johannesberg (DE)
(74) Vertreter: Stoffregen, Hans-Herbert
(86) Internationale Anmeldenummer: PCT/EP2002/007283
(87) Internationale Veröffentlichungsnummer: WO 2003/007835

(56) Entgegenhaltungen:
- EP-A- 1 106 146
- DE-C- 19 710 273

## Beschreibung

Die Erfindung betrifft ein Verfahren und eine Vorrichtung zur dreidimensionalen Vermessung und Digitalisierung eines Gispsmodells oder eines das Grundgerüst eines Zahnersatzes beschreibenden Positivmodells für die Herstellung von Zahnersatz gemäß dem Oberbegriff der unabhängigers Ansprüche.

Die Erfindung bezieht sich insbesondere auf das Gebiet der Herstellung von Grundgerüsten für Zahnersatz, insbesondere für Zahnkronen und/oder Zahnbrücken zur Befestigung auf vorbereiteten natürlichen und/oder künstlichen Zahnstümpfen oder dergleichen.

Es sind eine Anzahl von Vorrichtungen und Verfahren zur Herstellung von künstlichen Zahnbrücken und Zahnkronen bekannt. Im Allgemeinen wird nach der zahnärztlichen Präparation, bei der die zur Verankerung dienenden Zähne zur Aufnahme einer Zahnkrone oder Zahnbrücke durch Beschleifen vorbereitet oder z. B. ein Stift implantiert wird, ein Abdruck des Zahnstumpfes, der Zahnumgebung und des Kiefers angefertigt. Dies erfolgt üblicherweise mit Silicon-Vergussmassen, es sind aber auch andere Materialien bekannt.

Aus dem Abdruck (zeigt die Situation im Mund des Patienten negativ) kann über eine Gipsabformung ein sogenanntes Meistermodell hergestellt werden. Dieses Modell zeigt die Situation im Mund des Patienten positiv. In diesem Modell modelliert der Zahntechniker mit seinen handwerklichen Fähigkeiten ein Modell des Grundgerüstes des Zahnersatzes aus Wachs oder aus bei niedriger Temperatur schmelzendem oder polymerisierend aushärtendem Kunststoff (Positivmodell). Hierbei kann der Zahntechniker über das vorhandene Gipsmodell auch den Gegenbiss des anderen Kiefers berücksichtigen.

Traditionell wird das von dem Zahntechniker erstellte Modell in feuerfesten Massen eingebettet und ausgeschmolzen. In der so entstandenen Gussform kann das Grundgerüst in den üblichen metallischen Dentallegierungen durch Feinguss erstellt werden.

Üblicherweise erfolgt aus kosmetischen Gründen zumindest im Frontzahnbereich noch eine Verblendung in Keramik oder Kunststoff.

Eine Werkzengmaschine zur dreidimensionalen Vermessung und Digitalisierung von Positivmodellen und zur Herstellung von Grundgerüsten für Zahnersatz ist beispielsweise aus der EP 1 106 146 A1 bekannt.

Aus der WO 99/47065 ist es bekannt, im Anschluss an die Bildung eines Wachsmodells (Positivmodell) deren äußere und innere Oberfläche vollständig zu digitalisieren. Ein die Situation im Patientenmund unvollständig wiedergebendes Modell wird danach bezüglich der dreidimensionalen äußeren und inneren Oberfläche rechentechnisch ergänzt. Das Ergebnis der Digitalisierung und einer rechentechnischen Ergänzung soll eine digitale Beschreibung der kompletten Oberfläche des herzustellenden Prothesengrundgerüstes darstellen. Dabei kann das Positivmodell in Schritten bis zu 180° gedreht werden, um die oklusal und kavital zugänglichen Oberflächen zu digitalisieren. Die im Ausführungsbeispiel in WO 99/47065 beschriebene Digitalisierung eines Wachsmodells (Positivmodell) einer Zahnbrückenkonstruktion soll durch schlangenlinienförmige Abtastung des Wachskörpers von zwei Seiten aus erfolgen, in dem das Positivmodell zwischen zwei Wellen eingespannt wird.

Dabei soll die Digitalisierung mechanisch oder optisch erfolgen. Hierzu wird auf Verfahren zur Digitalisierung im Mund eines Patienten auf einem präparierten Zahnstumpf oder auf Modelle verwiesen, die beispielsweise hinsichtlich einer mechanischen Digitalisierung aus US 4,182,312 und hinsichtlich einer optischen Digitalisierung aus EP 0 054 785 A1 bekannt sind.

Der wesentliche Nachteil des aus US 4,182,312 bekannten mechanischen Digitalisierens liegt in der Fixierung des mechanischen Abtastgerätes am Patienten, da die Abtastung direkt in der Mundhöhle des Patienten erfolgen soll. Entsprechend problematisch ist die sichere Handhabung des Gerätes in der engen Mundhöhle. Mit der Abtastung von Zähnen und umliegendem Gewebe soll wie bei einer Kopierfräsmaschine direkt eine Bearbeitungsmaschine zur Herstellung von Zahnprothesen gesteuert werden. Hierzu muss eine Sonde mit einem daran fest fixierten Übertragungsgestänge vom Zahnarzt über die interessierenden Oberflächen im Mund des Patienten bewegt werden. Eine vollständige Erfassung der Fläche erfordert sehr viele Abtastbewegungen, was aufgrund des Zeitbedarfes für den Patienten stark belastend ist. Weiterhin müssen die Sondenspitzen je nach Form des Bearbeitungswerkzeuges gewechselt werden.

Bei dem in EP 0 054 785 A1 beschriebenen Verfahren soll ein Bildaufnahmekopf in den Mund eines Patienten eingebracht werden. Dieser Bildaufnahmekopf soll ein dreidimensionales Bild einer Zahnkavität oder dergleichen erfassen. Die Bilddaten sollen dazu auf einen Computerbildschirm ausgegeben werden, so dass ein Zahnarzt überprüfen kann, ob die Positionierung des Bildaufnahmekopfes eine hinreichend genaue Abbildung ermöglicht. Gegebenenfalls kann die günstigere Positionierung des Bildaufnahmekopfes entsprechend verändert werden.

Wenn eine als zutreffend befundene Stellung erreicht worden ist, soll - ohne nähere Erläuterung - ein dreidimensionales Abbild der Zahnkavität oder dergleichen räumlich dimensionsgetreu gebildet werden. Die entsprechenden Daten sollen dann durch Interpolation und manuelle Bearbeitung des Datensatzes nach Art einer CAD-Konstruktion ergänzt werden, bis ein entsprechender Zahnersatzkörper fertig modelliert ist. Die entsprechenden Daten sollen dann zur Bearbeitung eines geeigneten Rohlings verwendet werden, um unter Umgehung der eingangs beschriebenen handwerklichen Fertigungsschritte direkt aus der Bilddarstellung eine passende Zahnprothese herzustellen.

In der Praxis als nachteilig hat sich auch bei diesem Verfahren das umständliche Hantieren im Mund des Patienten mit der Kamera herausgestellt, insbesondere erfordert dies große Disziplin beim Patienten.

Weiterhin ist es, wie in der genannten Schrift beschrieben, erforderlich, den Zahn, der vermessen werden soll, mit einem Pulver zu beschichten, um definierte Reflektionsverhältnisse zu erhalten, da das natürliche Zahnmaterial transluzente Eigenschaften besitzt. Aufgrund der transluzenten Eigenschaften kann sonst Licht teilweise unkontrolliert in den zu vermessenden Zahnstumpf eindringen und unter Umständen in tieferen Schichten reflektiert werden, was zu einem fehlerhaften Ergebnis führen würde. Die Beschichtung mit einem Reflektionspulver erhöht aber gleichzeitig die Ungenauigkeit durch das Auftragen des Pulvers, das naturgemäß und aufgrund der beengten Verhältnisse im Patientenmund in der Praxis stets ungleichmäßig sein wird. Weiterhin nachteilig ist das begrenzte Auflösungsvermögen der Bildaufnehmer und der schwierigen Beleuchtungsverhältnisse in dem zu vermessenden Mund.

Weiterhin sind noch andere Vorgehensweisen zum optischen Digitalisieren von Werkstücken auf dem Gebiet der Dentaltechnik bekannt, bei denen ein eingespanntes Werkstück in typisch 8 bis 16 unterschiedlichen Winkelstellungen abgebildet wird und die so erhaltenen Daten rechnerisch zu einem Volumenmodell zusammengesetzt werden. Neben hohen Anforderungen an die Genauigkeit der verwendeten Geräte verursacht dieses Verfahren aufgrund der vielen und damit langen Messungen erheblichen Rechenaufwand mit erheblichen Fehlerquellen. Insgesamt sind diese Verfahren daher sehr teuer und zeitaufwendig.

Aus der DE 43 01 538 A1 ist ein Verfahren und eine Anordnung zur berührungslosen dreidimensionalen Messung von Gebissmodellen bekannt. Hierzu wird das Messgut auf einem Drehtisch angeordnet, um ersteres nach dem Triangulationsprinzip auszumessen.

Eine Bohrschablone zum Implantieren künstlicher Zähne mittels CAD/CAM-Technik wird nach der DE 100 29 256 A1 durch Laserabtastung eines Arbeitsmodells hergestellt.

Aus der WO 01/39691A1 ist eine Werkzeugmaschine sowie ein Verfahren zur Herstellung von Grundgerüsten für Zahnersatz bekannt. Hierzu wird ein zahntechnisches Präparationsmodell des Grundgerüstes bevorzugterweise taktil abgetastet, um aus hierdurch gewonnenen Digitalisierungsdaten einen Rohling zur Herstellung des Grundgerüstes herzustellen. Zum Abtasten kann das Präparationsmodell in zwei um 180° gedrehte Positionen eingestellt werden.

Der Erfindung liegt das Problem zu Grunde, ein insbesondere hinsichtlich der Handhabung und Wirtschaftlichkeit verbessertes Verfahren zum Vermessen eines Gips-oder Positivmodells und eine Vorrichtung zur Durchführung des Verfahrens bereitzustellen.

Das Problem wird erfindungsgemäß im Wesentlichen gelöst durch:
Einspannen des Gips- oder Positivmodells in eine um eine Drehachse drehbare Halterung in einer definierten Orientierung;
Bestrahlen des Gips- oder Positivmodells mittels einer Strahlungsquelle und Aufnehmen der von dem Gips- oder Positivmodell reflektierten Strahlung;
Auswerten der reflektierten Strahlung durch eine Abtasteinheit und Erzeugen einer Abstandsinformaüon;
Definiertes Verfahren des Gips- oder Positivmodells relativ zu der Strahlungsquelle entlang einer Ebene und/oder ersten Achse (y), die senkrecht oder nahezu senkrecht zur Bestrahlungsrichtung verläuft;
Verknüpfen eines Signals zur Erkennung der Drehung mit den Wege- und Abstandsinformationen zur Bildung eines dreidimensionalen Volumenmodells des Gips- oder Positivmodells, wobei während der Digitalisierung des Gips- oder Positivmodells entlang eines Abtastweges s mit s ≥ 1 mm der Abstand zwischen der Halterung und Abtasteinheit in Richtung der optischen Achse (z-Achse) der Abtasteinheit unverändert oder im Wesentlichen unverändert bleibt.

Insbesondere entspricht der Abtastweg s der gesamten oder nahezu gesamten Abtaststrecke entlang einer Seite des abzutastenden Modells. Zur Messung und Digitalisierung eines Gipsmodells ist ein Drehen nicht erforderlich. Bei einem Positivmodell ist ein Drehen um 180° oder in etwa 180° um die Drehachse der Halterung erforderlich, die senkrecht zur Bestrahlungsrichtung verläuft.

Durch das erfindungsgemäße Verfahren können sehr genaue Ergebnisse mit einem verhältnismäßig einfachen apparativen Aufbau erhalten werden, wobei das Verfahren zudem wenig anfällig für Fehlerquellen ist. Weiterhin ist der Rechenaufwand zur Bildung eines Datenmodells des zu vermessenden Körpers im Vergleich zu den bekannten Verfahren sehr viel geringer, da nicht mehr eine Vielzahl verschiedener Ansichten rechnerisch miteinander verknüpft werden müssen; denn das Positivmodell wird nur in zwei um 180° versetzten Positionen und das Gipsmodell nur in einer Position gemessen. Ferner bleibt der Abstand zwischen der Halterung bzw. der von dieser aufgespannten Ebene bzw. einer die Drehachse durchsetzenden Ebene und der Abtasteinheit insbesondere beim Scannen einer Seite, zumindest jedoch in einer Abtastrichtung entlang des Gips-oder Positivmodells bzw entlang eines Abtastwegs konstant oder nahezu konstant.

Durch diese Maßnahme lässt sich eine Software zur Realisierung der Datenaufbereitung wesentlich einfacher gestalten, wodurch sich die Arbeitsgeschwindigkeit erhöht, die Hardwareanforderungen zu Gunsten eines günstigeren Preises vermindern und aufgrund der einfacheren Struktur der Software die Gefahr von Programmier- oder Rechenfehlern wesentlich vermindert.

In einer besonders zweckmäßigen Ausführungsform erfolgt die Bestrahlung durch einen Streifenscanner. Bei einer solchen Ausgestaltung des erfindungsgemäßen Verfahrens muss zur dreidimensionalen Digitalisierung eines Körpers bzw. seiner Oberfläche nur noch eine mechanische Verfahrbewegung in einer Achse durchgeführt werden, wodurch sich der apparative Aufwand weiter vermindern und verbilligen lässt und zugleich mögliche Fehler durch mechanische Toleranzen vermindert werden.

Insbesondere aufgrund des derzeit noch mäßigen Auflösungsvermögens von Streifenscannern kann es aber auch für die Erzielung einer hohen Genauigkeit zweckmäßig sein, wenn die Bestrahlung durch einen Laser mit annähernd punktförmigem Strahlenbündel erfolgt.

Hierbei ist es insbesondere zweckmäßig, wenn das Verfahren noch die Schritte eines definierten Verfahrens des Körpers relativ zu der Strahlungsquelle entlang einer zweiten Achse annähernd senkrecht zur Bestrahlungsrichtung und Verknüpfen des zweiten Verfahrweges mit der Abstandsinformation und dem ersten Verfahrweg umfasst.

Zur Ermittlung von Absolutwerten von Höheninformationen des Körpers ist es zweckmäßig, wenn die Abstandsinformation auf einen Referenzpunkt des Körpers normiert wird, insbesondere, wenn der Referenzpunkt annähernd derjenige Punkt des Körpers ist, der den geringsten Abstandswert liefert, was zweckmäßig durch einen Vorabdurchlauf des Verfahrens ermittelt wird. Aus den so erhaltenen Daten können direkt absolute Informationen über die Höhe des Körpers abgelesen werden, die z. B. zur Auswahl des Rohlings verwendet werden können.

Die Aufgabe wird erfindungsgemäß ferner gelöst durch eine Vorrichtung mit einer Halterung zur Aufnahme eines zu vermessenden und zu digitalisierenden Gips- oder Positivmodells, einer Abtasteinheit zur optischen Abtastung des Gips- oder Positivmodells, wobei die Halterung mit dem Gips- oder Positivmodell in wenigstens einer Richtung relativ und rechtwinklig oder annähernd rechtwinklig zur optischen Achse der Abtasteinheit verfahrbar ist, und einer Einrichtung zur Erfassung des Weges der um eine senkrecht zur optischen Achse um zumindest 180° oder nahezu 180° drehbaren Halterung mit dem Gips- oder Positivmodell in der wenigstens einen Richtung, wobei die Abtasteinheit einen CCD-Bildaufnehmer, einen doppelbrechenden Kristall und ein Objektiv im Strahlengang umfasst. Die Möglichkeit der Drehung der Halterung ist beim Messen und Digitalisieren eines Gipsmodells nicht erforderlich.

In einer besonders zweckmäßigen Ausführungsform der Vorrichtung umfasst die Abtasteinheit ferner eine Laserdiode sowie eine Einrichtung zur Einspiegelung des Lichtes der Laserdiode in den Strahlengang der Abtasteinheit.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von den Zeichnungen zu entnehmenden bevorzugten Ausführungsbeispielen.

### Es zeigen:

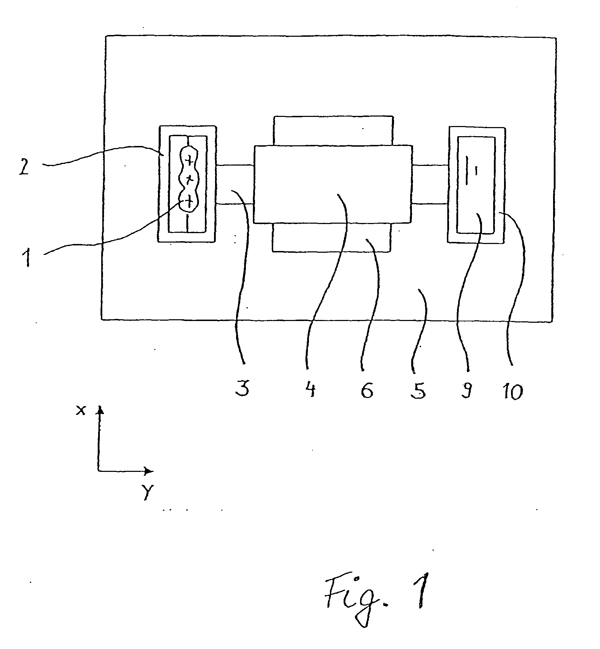

- Fig. 1:: eine schematische Ansicht einer Vorrichtung zur Durchführung des erfindungsgemäßen Verfahrens;

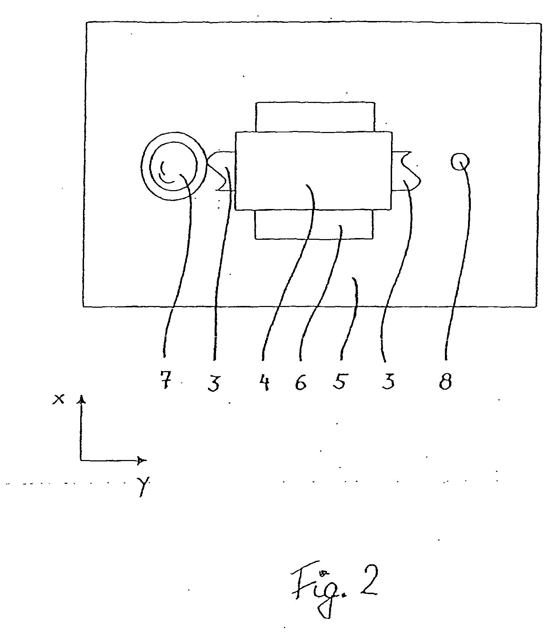

- Fig. 2:: die Vorrichtung aus Fig. 1, wobei jeweils die Halterahmen weggelassen sind, so dass die optische Abtasteinheit und der Fräser erkennbar wird; und

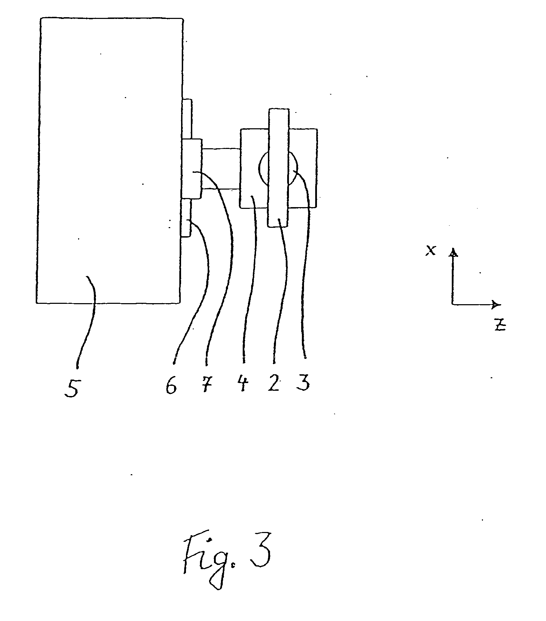

- Fig. 3:: eine vereinfachte Seitenansicht der Vorrichtung aus Fig. 1 und 2.

Die nachfolgend erwähnten Orientierungen eines Koordinatensystems beziehen sich auf die Darstellung in den beigefügten Zeichnungen und dienen nur der Erläuterung der Erfindung.

Im ersten Ausführungsbeispiel wird ein Positivmodell in Form einer Wachsmodellation 1 einer Dentalbrücke in einem Halterahmen 2 einer erfindungsgemäßen Vorrichtung, wie in den Figuren dargestellt, eingespannt. Der Halterahmen 2 ist auf einer Welle 3 montiert, die eine Drehung des Halterahmens 2 um 180° zulässt. Weiterhin ist die Welle 3 auf einem in drei Achsen x, y, z präzise verfahrbaren Tisch 4 montiert. Die Drehachse der Welle 3 liegt beispielsweise in y-Richtung. Der Antrieb des Tisches 4 ist in einem Gerätegehäuse 5 montiert. Die für die Verfahrbewegung des Tisches 4 erforderliche Öffnung in dem Gerätegehäuse 5 kann in jeder an sich bekannten Weise abgedeckt sein, z.B. durch einen Faltenbalg oder über eine Manschette 6.

Weiterhin ist in dem Gerätegehäuse 5 eine optische Abtasteinheit 7 zur Entfernungsmessung untergebracht. Die Abtasteinheit 7 umfasst eine nicht näher dargestellte Laserstrahlquelle, z. B. eine Laserdiode, sowie zweckmäßig eine Einrichtung zur Einspiegelung des Lichts der Laserdiode in den Strahlengang der Abtasteinheit 7 und weitere optische Elemente, sowie eine in der Empfindlichkeit auf den Laser abgestimmte CCD-Kamera. Vor der CCD-Kamera ist ein doppelbrechender Kristall angeordnet, der das von der Wachsmodellation 1 (Positivmodell) reflektierte Laserlicht in einen ordentlichen und einen außerordentlichen Teil auftrennt, wodurch auf dem CCD-Bildaufnehmer Hologramme mit Grenzbereichen entstehen, die genau messbar sind und anhand derer der genaue Abstand zum gemessenen Punkt ermittelt werden kann.

Die Abtasteinheit 7 ist so in dem Gerätegehäuse 5 befestigt, dass ein ausgesandtes Laserstrahlbündel entlang der z-Achse verläuft. Nach einmaliger Kalibrierung bei der Montage liefert die Abtasteinheit 7 absolute Informationen über die Entfernung zu einem den Laserstrahl reflektierenden Objekt, z.B. einer in den Halterahmen 2 eingespannten Wachsmodellation 1 (Positivmodell), nach der sogenannten konoskopen Holographie. Einzelheiten dieses Messverfahrens sind beispielsweise in WO 99/64916, US 5,953,137, WO 99/42908, US 5,892,602, US 5,291,314, EP 0 394 137, EP 0 394 138 und US 4,976,504 beschrieben.

Die hohe Intensität des Laserlichts erlaubt die Verwendung eines Abbildungsobjektivs mit verhältnismäßig kleiner Öffnung, so dass sich eine Schärfentiefe ergibt, die größer ist, als beispielsweise die typische Höhe einer Zahnbrücke bzw. der Wachsmodellation 1 einer solchen oder der Zahnstümpfe eines Gipsmodells, z. B.15 mm.

Da die zuvor beschriebene Abtasteinheit 7 Messwerte über die absolute Entfernung des von dem Laserstrahl beleuchteten Punktes aufgrund der Reflexion als Messwert ausgibt, wird bei der Montage eines erfindungsgemäßen Gerätes nicht nur die Abtasteinheit 7 derart justiert, dass der Laserstrahl parallel zu der z-Achse des Tisches 4 verläuft, sondern über eine Referenzplatte, die in dem Halterahmen 2 eingespannt wird, die Abtasteinheit 7 auch kalibriert. Dabei kann zugleich der Bereich der tolerierbaren Unschärfe (Schärfentiefe) durch entsprechendes Verfahren des Tisches 4 in z-Richtung ermittelt werden.

Bei einer späteren Vermessung des Positivmodells 1 wie der Wachsmodellation oder des Gipsmodells, wird der Halterahmen 2 über den Tisch 4 entlang der z-Achse des Tisches 4 entsprechend in den Fokusbereich der Abtasteinheit 7 verfahren. Das Gips-oder Positivmodell 1 wird nun digitalisiert, indem der Halterahmen 2 und der Tisch 4 definiert entlang der x- und y-Achse verfahren, z. B. zeilen- oder spaltenweise, und diese Information mit der von der Abtasteinheit 7 ermittelten Abstandsinformation verknüpft wird. Die Position des Tisches 4 und damit des zu vermessenden Modells 1 in z-Richtung wird zur Bildung des Messdatensatzes von dem Abstandswert, den die Abtasteinheit 7 ausgibt, subtrahiert. Während der Abtastung des Modells 1 wird der Tisch 4 entlang der z-Achse nicht verfahren, sondern nur in x- und y-Richtung.

Durch Verknüpfung der x- und y-Positionswerte mit der Abstandsinformation der Abtasteinheit 7 wird ein Datenmuster erzeugt, das die dreidimensionale Gestaltung der der Abtasteinheit 7 zugewandten Seite des Gips- oder Positivmodells 1 wiedergibt.

Zur vollständigen dreidimensionalen Erfassung des gesamten Modells 1 wird das Positivmodell 1 mitsamt dem Halterahmen 2 nach Durchlauf der Abtastung einer Seite um 180° z. B. um die y-Achse gedreht und die Rückseite des Positivmodells 1 wird in gleicher Weise vermessen.

Es kann aber auch vor Beginn der Messung der ersten Seite des Positivmodells 1 ein Prescan (Vorabdurchlauf des Verfahrens) vorgenommen werden, um einen Extremwert des Positivmodells 1 in z-Richtung zu ermitteln, z. B. dem Modellpunkt mit dem geringsten Abstand zu der Abtasteinheit 7, und der zugehörige z-Wert der Koordinaten als Referenzwert erfasst und somit die Abstandsinformation auf den Modellpunkt als Referenzpunkt normiert werden. Dieser Referenzwert kann zur Bildung einer Bezugsebene senkrecht zur z-Achse herangezogen werden. Auf diese Weise können die Maximalausdehnungen des vermessenen Modells direkt aus dem erzeugten Datensatz entnommen werden.

Soweit durch die Vermessung von zwei Seiten redundante Messdaten erzeugt werden, können diese durch entsprechende Nachbearbeitung durch Software später bei der Bildung des Volumenmodells entfernt werden, um Fehlfunktionen bei der späteren Ansteuerung einer Bearbeitungsmaschine bzw. eines Bearbeitungswerkzeuges wie einem Fräser 8 zu vermeiden.

Ein solcher Fräser 8 ist zweckmäßig mit in ein Gehäuse 5 integriert, beispielsweise bezogen auf den Tisch 4 gegenüberliegend von der optischen Abtasteinheit 7. Zweckmäßig weist der Fräser 8 eine feststehende Spindel auf. Ein Keramikrohling 9, beispielsweise aus einem vorgesinterten Yttriumoxid-stabilisierten Zirkonoxid, wird in einem weiteren Halterahmen 10, der mit dem rückseitigen Ende der Welle 3 verbunden ist, eingespannt. Die zur Bearbeitung der dem Fräser 8 zugewandten Seite des Rohlings 9 erforderlichen Vorschubbewegungen in x-, y- und z-Richtung werden durch entsprechendes Verfahren des Tisches 4 mit der Welle 3 und dem Halterahmen 10 durchgeführt. Ist die dem Fräser 8 zugewandte Seite des Rohlings 9 fertig bearbeitet, kann der Rohling 9 durch Vorschub in z-Richtung von dem Fräser 8 weggefahren werden und der Halterahmen 10 wie bei der Abtastung des Positivmodells 1 um 180° gedreht werden, um die andere Seite des Rohlings 9 zu bearbeiten.

Anstelle eines Keramik-Rohlings 9 kann natürlich auch ein Rohling aus jedem anderen geeigneten Material verwendet werden, z. B. aus einem Metall, Kunststoffen oder Verbundwerkstoffen.

In einer weiteren nicht in den Figuren dargestellten Ausführungsform der Erfindung ist die Verwendung eines sog. Streifenscanners anstelle des Laserstrahls mit nahezu punktförmigem Querschnitt vorgesehen, wobei die Streifenbreite zumindest der Breite des zu scannenden Modells z. B. in der Größenordnung von 100 mm entsprechen sollte. Mit einem solchen Streifenscanner, der im Übrigen ähnlich der bereits vorne beschriebenen Abtasteinheit 7 arbeiten kann, wäre es dann möglich, ein Positivmodell 1 oder auch einen Gipsstumpf oder ein Gipsmodell des Kiefers durch Verfahren des Tisches 4 mit dem Halterahmen 2 und dem Gips- oder Positivmodell 1 entlang einer Achse komplett dreidimensional zu digitalisieren. Wird ein Positivmodell gescannt, werden durch Drehen der Halterung um 180° beide Seiten gemessen. Bei einem Gipsmodell wird nur die Seite mit den Zahnstümpfen gescannt.

Ein Wachsmodell einer Brückenkonsiruktion beispielsweise, das sowohl auf der Oberseite als auch auf der Unterseite dreidimensional gestaltete Funktions- bzw. Anschlussflächen aufweist, wird erwähntermaßen mit einem solchen Streifenscanner nach einer Drehung der Halterung um 180° von beiden Seiten abgetastet

Die erfindungsgemäße Ablastung eines dreidimensionalen Gips- oder Positivmodells 1 durch Verfahren in nur einer oder maximal zwei Achsen mit einer zusätzlichen Wendung des Modells 1 um 180° stellt auch bezüglich des erforderlichen Rechenaufwandes zur Bildung eines dreidimensionalen Datenmodells des vermessenen Gegenstands einen erheblichen Fortschritt gegenüber den bekannten optischen Abtasteinrichtungen dar, bei denen der abzutastende Gegenstand in der Regel mehrfach gekippt wird und die Datenmuster der so gewonnenen verschiedenen "Ansichten" durch entsprechende Rechenoperationen miteinander verknüpft werden, um ein Volumenmodell des vermessenen Gegenstandes zu erzeugen.

Allerdings ist darauf zu achten, dass für eine hinreichend zuverlässige Reflexion und damit eine zuverlässige Abstandsbestimmung durch die Abtasteinheit 7 bei typischen Werkstoffen für die Modellierung im Dentalbereich die zu vermessenden Flächen mit der optischen Achse des Laserstrahls einen Winkel von zumindest etwa 0,1°, vorzugsweise zumindest 1° zur z-Achse bilden. Allerdings sollte der Winkel 20° nicht überschreiten. Dies stellt in der Praxis jedoch keine Einschränkung dar, da spätestens für das Aufsetzen der Zahnprothese auf den präparierten Zahnstumpf oder das Implantat wenigstens eine solche Schräge zum ordnungsgemäßen Aufzementieren der Prothese erforderlich ist, wie sie auch als Ausformschräge bei einer klassischen gegossenen Prothese erforderlich wäre. Hinterschnitte dürfen bei solchen Prothesen in keinem Fall auftreten, da sich hier Hohlräume zwischen Prothese und Zahnstumpf bilden würden, die unweigerlich zu einer weiteren Schädigung des Zahnstumpfes beispielsweise durch in der so entstehenden Höhle verbliebene Kariesbakterien führen würden.

Um eine hinreichend genaue Einspannung des zu vermessenden Gips- oder Positivmodells 1 in den Halterahmen 2 sicherzustellen, kann diese beispielsweise mit Hilfe eines Parallelometers erfolgen, wobei mit Hilfe der Ausrichtung der sogenannten Lichtspaltmethode ein scheinbarer Hinterschnitt durch Schieflage des Modells oder ein tangentialer Verlauf des Laserstrahls der Abtasteinheit 7 mit sehr guter Zuverlässigkeit und Reproduzierbarkeit ausgeschlossen werden kann.

Es versteht sich von selbst, dass anstelle des Verfahrens des Tisches 4 in z-Richtung auch eine Verfahrbarkeit der Abtasteinheit 7 in z-Richtung vorgesehen werden kann oder sogar für die Abtastung auf eine Verfahrbarkeit in z-Richtung ganz verzichtet werden kann, wenn die Abtasteinheit 7 mit austauschbaren Objektiven verschiedener Brennweite zur Anpassung des Arbeitsabstandes oder mit einer Zoom-Optik verstellbarer Brennweite ausgestattet ist.

## Patentansprüche

1. Verfahren zur dreidimensionalen Vermessung und Digitalisierung eines Gipsmodells oder eines das Grundgerüst eines Zahnersatzes beschreibenden Positivmodells, insbesondere für die Herstellung von Zahnersatz, mit folgenden Schritten:
- Einspannen des Gips- oder Positivmodells (1) in eine um eine Drehachse drehbare Halterung (2) in einer definierten Orientierung;
- Bestrahlen des Gips- oder Positivmodells (1) mittels einer Strahlungsquelle und Aufnehmen der von dem Gips- oder Positivmodell (1) reflektierten Strahlung;
- Auswerten der reflektierten Strahlung durch eine Abtasteinheit (7) und Erzeugen einer Abstandsinformation;
- Definiertes Verfahren des Gips- oder Positivmodells (1) relativ zu der Strahlungsquelle entlang einer Ebene und/oder ersten Achse (y), die senkrecht oder nahezu senkrecht zur Bestrahlungsrichtung verläuft;
- Verknüpfen eines Signals zur Erkennung der Drehung mit den Wege- und Abstandsinformationen zur Bildung eines dreidimensionalen Volumenmodells des Gips- oder Positivmodells (1), wobei während der Digitalisierung des Gips- oder Positivmodells (1) entlang eines Abtastweges s mit s ≥ 1 mm der Abstand zwischen der Halterung (2) und Abtasteinheit (7) in Richtung der optischen Achse (z-Achse) der Abtasteinheit (7) unverändert oder im Wesentlichen unverändert bleibt.

2. Verfahren nach Anspruch 1,
**dadurch gekennzeichnet,**
**dass** der Abstand zwischen der Halterung (2) und der Abtasteinheit (7) entlang des gesamten oder nahezu gesamtes Abtastweges s einer Seite des Gips- oder Positivmodells konstant ist.

3. Verfahren nach Anspruch 1,
**dadurch gekennzeichnet,**
**dass** zum Vermessen und Digitalisieren des Positivmodells dieses um 180° oder in etwa 180° um die Drehachse der Halterung, die senkrecht zur Bestrahlungsrichtung verläuft, gedreht wird.

4. Verfahren nach zumindest einem der vorhergehenden Ansprüche,
**dadurch gekennzeichnet,**
**dass** die Bestrahlung durch einen Streifenscanner erfolgt.

5. Verfahren nach zumindest einem der vorhergehenden Ansprüche,
**dadurch gekennzeichnet,**
**dass** die Bestrahlung durch einen Laser mit annähernd punktförmigem Strahlenbündel erfolgt.

6. Verfahren nach zumindest Anspruch 1, ferner **gekennzeichnet durch** folgende Schritte:
- Definiertes Verfahren des Körpers (1) relativ zu der Strahlungsquelle entlang einer zur ersten Achse (y) senkrecht oder nahezu senkrecht verlaufenden zweiten Achse (x) senkrecht oder nahezu senkrecht zur Bestrahlungsrichtung; und
- Verknüpfen des zweiten Verfahrweges mit der Abstandsinformation und dem ersten Verfahrweg.

7. Verfahren nach einem der vorhergehenden Ansprüche, ferner **gekennzeichnet durch** folgenden Schritt:
- Normieren der Abstandsinformation auf einen Referenzpunkt des Gips-oder Positivmodells (1).

8. Verfahren nach Anspruch 7,
**dadurch gekennzeichnet,**
**dass** der Referenzpunkt annähernd derjenige Punkt des Gips- oder Positivmodells (1) ist, der den geringsten Abstandswert liefert.

9. Verfahren nach Anspruch 7 oder 8,
**dadurch gekennzeichnet,**
**dass** der Referenzpunkt durch einen Vorabdurchlauf des Verfahrens ermittelt wird.

10. Vorrichtung zur Durchführung eines Verfahrens nach einem der vorhergehenden Ansprüche, mit einer Halterung (2) zur Aufnahme eines zu vermessenden und zu digitalisierenden Gips- oder Positivmodells (1), einer Abtasteinheit (7) zur optischen Abtastung des Gips- oder Positivmodells (1), wobei die Halterung (2) mit dem Gips- oder Positivmodell (1) in wenigstens einer Richtung (y) relativ und rechtwinklig oder annähernd rechtwinklig zur optischen Achse der Abtasteinheit (7) verfahrbar ist, und einer Einrichtung zur Erfassung des Weges der um eine senkrecht zur optischen Achse um zumindest 180° oder nahezu 180° drehbaren Halterung (2) mit dem Gips- oder Positivmodell (1) in der wenigstens einen Richtung (y), **dadurch gekennzeichnet, daß** die Abtasteinheit (7) einen CCD-Bildaufnehmer, einen dop- - pelbrechenden Kristall und ein Objektiv im Strahlengang umfasst.

11. Vorrichtung nach Anspruch 10,
**dadurch gekennzeichnet,**
**dass** die Abtasteinheit ferner eine Laserdiode sowie eine Einrichtung zur Einspiegelung des Lichtes der Laserdiode in den Strahlengang der Abtasteinheit (7) umfasst.

## Claims

1. Method for the three-dimensional measurment and digitization of a plaster model or of a positive model describing the skeletal structure of a dental prosthesis, in particular for producing a dental prosthesis, with the following steps:
- clamping the plaster or positive model (1) in a mounting (2) which is rotatable about an axis of rotation in a defined orientation;
- irradiation of the plaster or positive model (1) by means of a radiation source and receiving the radiation reflected by the plaster or positive model (1);
- evaluating the reflected radiation by a scanning unit (7) and generating a distance information;
- defined movement of the plaster or positive model (1) relative to the radiation source along a plane and/or first axis (y) which extends perpendicular or almost perpendicular to the direction of radiation;
- linking a signal for detection of the rotation with the path and distance information for forming a three-dimensional volume model of the plaster or positive model (1), whereby the distance between the mounting (2) and scanning unit (7) in direction or the optical axis (z axis) of the scanning unit (7) remains unchanged or essentially unchanged during the digitization of the plaster or positive model (1) along a scanning path s, where s ≥ 1 mm.

2. Method according to claim 1,
**characterized in**
**that** the distance between the mounting (2) and the scanning unit (7) along the entire or almost entire scanning path s of a side of the plaster or positive model is constant.

3. Method according to claim 1,
**characterized in**
**that** to measure and digitalize the positive model, it is turned through 180° or approximately 180° about the axis of rotation of the mounting which extends perpendicular to the direction of radiation.

4. Method according to at least one of the preceding claims,
**characterized in**
**that** radiation takes place by a line scanner.

5. Method according to at least one of the preceding claims,
**characterized in**
**that** the radiation takes place by a laser beam with almost point-like beams.

6. Method according to at least claim 1, further **characterized by** the following steps:
- defined movement of the body (1) relative to the radiation source along a second axis (x) extending perpendicular or almost perpendicular to the first axis (y) perpendicular to or almost perpendicular to the direction of radiation; and
- linking the second travel path with the distance information and the first travel path.

7. Method according to at least one of the preceding claims, further **characterized by** the following step:
- standardizing the distance information to a reference point of the plaster or positive model (1).

8. Method according to claim 7,
**characterized in**
**that** the reference point is almost that point of the plaster or positive model (1) which delivers the lowest distance value.

9. Method according to claim 7 or 8,
**characterized in**
**that** the reference point is determined by a preliminary run-through of the method.

10. Device for carrying out a method according to one of the preceding claims, having a mounting (2) to accommodate a plaster or positive model (1) to be measured and digitalized, a scanning unit (7) for optically scanning the plaster or positive model (1), wherein the mounting (2) with the plaster or positive model (1) can be moved in at least one direction (y) relative and at a right angle or almost at a right angle to the optical axis of the scanning unit (7), and a device for detecting the path of the mounting (2) with the plaster or positive model (1) which is rotatable perpendicular to the optical axis through at least 180° or almost 180° in the at least one direction (y),
**characterized in**
**that** the scanning unit (7) comprises a CCD image recorder, a birefractive crystal and an objective in the ray path.

11. Device according to claim 10,
**characterized in**
**that** the scanning unit also comprises a laser diode as well as a device for reflecting the light of the laser diode into the ray path of the scanning unit (7).

## Revendications

1. Procédé pour mesurer et numériser en trois dimensions un modèle en plâtre ou un modèle positif représentant la structure de base d'une prothèse dentaire, notamment pour la fabrication d'une prothèse dentaire, comprenant les étapes suivantes consistant à :
- fixer le modèle en plâtre ou modèle positif (1) selon une orientation définie sur un support (2) rotatif autour d'un axe de rotation ;
- irradier le modèle en plâtre ou modèle positif (1) au moyen d'une source de rayonnement et capter le rayonnement réfléchi par le modèle en plâtre ou modèle positif (1) ;
- exploiter le rayonnement réfléchi au moyen d'une unité de balayage (7) et produire une information de distance ;
- déplacer de manière définie le modèle en plâtre ou modèle positif (1) par rapport à la source de rayonnement le long d'un plan et/ou d'un premier axe (y) perpendiculaire ou quasiment perpendiculaire à la direction d'irradiation ;
- combiner un signal de détection de rotation aux informations de trajectoire et de distance pour former un modèle volumétrique en trois dimensions du modèle en plâtre ou modèle positif (1), sachant que la distance entre le support (2) et l'unité de balayage (7) dans la direction de l'axe optique (axe z) de l'unité de balayage (7) reste inchangée ou essentiellement inchangée lors de la numérisation du modèle en plâtre ou modèle positif (1) le long d'une trajectoire de balayage s, avec s ≥ 1 mm.

2. Procédé selon la revendication 1,
**caractérisé en ce que**
la distance entre le support (2) et l'unité de balayage (7) le long de la totalité ou de la quasi-totalité de la trajectoire de balayage s d'un côté du modèle en plâtre ou modèle positif est constante.

3. Procédé selon la revendication 1,
**caractérisé en ce que**
pour mesurer et numériser le modèle positif, on tourne celui-ci de 180° ou d'environ 180° autour de l'axe de rotation du support perpendiculaire à la direction d'irradiation.

4. Procédé selon l'une au moins des revendications précédentes,
**caractérisé en ce que**
le rayonnement est produit par un scanner linéaire.

5. Procédé selon l'une au moins des revendications précédentes,
**caractérisé en ce que**
le rayonnement est produit par un laser à faisceau de rayons pratiquement punctiforme.

6. Procédé selon au moins la revendication 1,
**caractérisé en outre par**
les étapes suivantes consistant à :
- déplacer de manière définie le corps (1) par rapport à la source de rayonnement le long d'un deuxième axe (x) perpendiculaire ou quasiment perpendiculaire au premier axe (y) de manière perpendiculaire ou quasiment perpendiculaire à la direction de rayonnement, et
- combiner la deuxième trajectoire de déplacement à l'information de distance et à la première trajectoire de déplacement.

7. Procédé selon l'une des revendications précédentes,
**caractérisé en outre par**
l'étape suivante consistant à :
- normaliser l'information de distance à un point de référence du modèle en plâtre ou modèle positif (1).

8. Procédé selon la revendication 7,
**caractérisé en ce que**
le point de référence est pratiquement le point du modèle en plâtre ou modèle positif (1) fournissant la plus faible valeur de distance.

9. Procédé selon la revendication 7 ou 8,
**caractérisé en ce que**
le point de référence est déterminé par une exécution préliminaire du procédé.

10. Dispositif permettant de mettre en oeuvre un procédé selon l'une des revendications précédentes, comportant un support (2) destiné à recevoir un modèle en plâtre ou modèle positif (1) à mesurer et à numériser, une unité de balayage (7) pour le balayage optique du modèle en plâtre ou modèle positif (1), le support (2) portant le modèle en plâtre ou modèle positif (1) pouvant être déplacé dans au moins une direction (y) relativement et perpendiculairement ou pratiquement perpendiculairement à l'axe optique de l'unité de balayage (7), et comportant un dispositif de saisie de la trajectoire, dans l'au moins une direction (y), du support (2) portant le modèle en plâtre ou modèle positif (1) et tournant sur au moins 180° ou pratiquement 180°, autour d'un axe de rotation perpendiculaire à l'axe optique
**caractérisé en ce que**
l'unité de balayage (7) comprend un capteur d'images CCD, un cristal biréfringent et un objectif dans la trajectoire de rayonnement.

11. Dispositif selon la revendication 10,
**caractérisé en ce que**
l'unité de balayage comprend en outre une diode laser ainsi qu'un dispositif permettant de réfléchir la lumière de la diode laser dans la trajectoire de rayonnement de l'unité de balayage (7).
